(19) Europäisches Patentamt
European Patent Office
Office européen des brevets

(11) Veröffentlichungsnummer: **0 450 368 A2**

(12) # EUROPÄISCHE PATENTANMELDUNG

(21) Anmeldenummer: **91104041.8**

(22) Anmeldetag: **15.03.91**

(51) Int. Cl.5: **C09K 19/14**, C09K 19/30, G02F 1/133, C09K 19/42

(30) Priorität: **31.03.90 DE 4010414**

(43) Veröffentlichungstag der Anmeldung: **09.10.91 Patentblatt 91/41**

(84) Benannte Vertragsstaaten: **DE GB**

(71) Anmelder: **MERCK PATENT GESELLSCHAFT MIT BESCHRÄNKTER HAFTUNG**
**Frankfurter Strasse 250**
**W-6100 Darmstadt(DE)**

(72) Erfinder: **Geelhaar, Thomas, Dr.**
**Kupferbergterrasse 25**
**W-6500 Mainz(DE)**
Erfinder: **Weber, Georg**
**Wilhelm-Leuschner-Strasse 38**
**W-6106 Erzhausen(DE)**
Erfinder: **Reiffenrath, Volker**
**Jahnstrasse 18**
**W-6101 Rossdorf(DE)**
Erfinder: **Poetsch, Eike, Dr.**
**Am Buchwald 4**
**W-6109 Mühltal 6(DE)**

(54) **Flüssigkristallanzeige und Flüssigkristallmischung.**

(57) Die Erfindung betrifft eine Flüssigkristallanzeige basierend auf dem Prinzip der elektrisch kontrollierten Doppelbrechung mit

- zwei planparallelen Trägerplatten, die mit einer Umrandung eine Zelle bilden,
- einer in der Zelle befindlichen nematischen Flüssigkristallmischung mit negativer dielektrischer Anisotropie,
- Elektrodenschichten mit darüberliegenden Orientierungsschichten auf den Innenseiten der Trägerplatten und
- einem Anstellwinkel zwischen der Längsachse der Moleküle an der Oberfläche der Trägerplatten und den Trägerplatten von etwa 85 Grad bis 95 Grad, dadurch gekennzeichnet, daß die nematische Flüssigkristallmischung eine Verbindung der Formel I enthält,

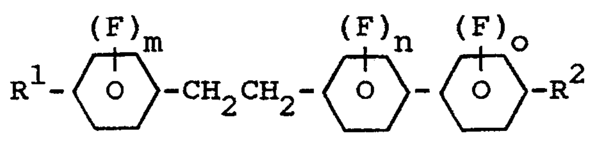

I

worin

$R^1$ und R2 jeweils unabhängig voneinander eine Alkyl- oder Alkenylgruppe mit bis zu 15 C-Atomen, worin auch eine $CH_2$-Gruppe durch eine Gruppierung ausgewählt aus der Gruppe -O-, -S- und -CO-, ersetzt kein kann, oder einer der Reste $R^1$ und $R^2$ auch

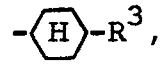

wobei $R^3$ eine der für $R^1$ und $R^2$ angegebenen Bedeutungen hat, und

m, n und o jeweils unabhängig voneinander 0, 1 oder 2

bedeuten,

EP 0 450 368 A2

sowie ein Verfahren zur Herstellung einer solchen Flüssigkristallanzeige.

Die Erfindung betrifft eine Flüssigkristallanzeige basierend auf dem Prinzip der elektrisch kontrollierten Doppelbrechung mit

- zwei planparallelen Trägerplatten, die mit einer Umrandung eine Zelle bilden,
- einer in der Zelle befindlichen nematischen Flüssigkristallmischung mit negativer dielektrischer Anisotropie,
- Elektrodenschichten mit darüberliegenden Orientierungsschichten auf den Innenseiten der Trägerplatten und
- einem Anstellwinkel zwischen der Längsachse der Moleküle an der Oberfläche der Trägerplatten und den Trägerplatten von etwa 85 Grad bis 95 Grad, dadurch gekennzeichnet, daß die nematische Flüssigkristallmischung eine Verbindung der Formel I enthält,

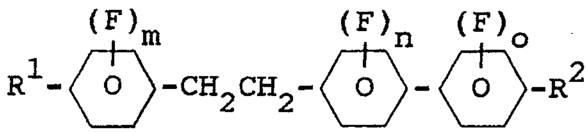

I

worin

$R^1$ und $R^2$ jeweils unabhängig voneinander eine Alkyl- oder Alkenylgruppe mit bis zu 15 C-Atomen, worin auch eine $CH_2$-Gruppe durch eine Gruppierung ausgewählt aus der Gruppe -O-, -S- und -CO-, ersetzt kein kann, oder einer der Reste $R^1$ und $R^2$ auch

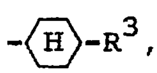

wobei $R^3$ eine der für $R^1$ und $R^2$ angegebenen Bedeutungen hat, und

m, n und o jeweils unabhängig voneinander 0, 1 oder 2

bedeuten.

Der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", (Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten $K_3/K_1$, hohe Werte für die optische Anisotropie $\Delta n$ und Werte für die dielektrische Anisotropie $\Delta\epsilon$ zwischen -0,5 und -5 aufweisen müssen, um für hochinformative Anzeigeelemente basierend auf dem ECB-Effekt eingesetzt werden zu können.

Auf dem ECB-Effekt basierende elektrooptische Anzeigeelemente weisen eine homöotrope Randorientierung auf.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder. Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Aus der WO 88/02130 sind auf den ECB-Effekt basierende Anzeigen bekannt, welche neben Verbindungen mit einer negativen dielektrischen Anisotropie in erster Linie flüssigkristalline Tolane, Cyclohexyltolane oder 4[2-(Cyclohexyl)-ethyl]bicyclohexane enthalten.

Der Nachteil der zuletzt genannten Verbindungsklasse liegt für ECB-Anwendungen in ihrer relativ niedrigen Doppelbrechung.

Es besteht somit noch ein großer Bedarf an flüssigkristallinen Phasen mit günstigen Mesophasenberei-

chen, hohen Werten für $K_3/K_1$, hoher optischer Anisotropie $\Delta n$, negativer dielektrischer Anisotropie $\Delta\epsilon$ und hoher Langzeitstabilität.

Der Erfindung lag daher die Aufgabe zugrunde, eine Flüssigkristallanzeige aufzufinden, die die oben angegebenen Nachteile nicht oder nur in geringerem Maße aufweist und deren FK-Phase insbesondere durch sehr gute Langzeitstabilität gekennzeichnet ist.

Diese Aufgabe wird erfindungsgemäß durch Verwendung der Verbindungen der Formel I gelöst. Es wurde gefunden, daß die erfindungsgemäßen flüssigkristallinen Phasen sehr günstige Eigenschaften und eine ausgezeichnete Langzeitstabilität aufweisen.

Gegenstand der Erfindung ist somit eine Flüssigkristallanzeige basierend auf dem Prinzip der elektrisch kontrollierten Doppelbrechung mit

- zwei planparallelen Trägerplatten, die mit einer Umrandung eine Zelle bilden,
- einer in der Zelle befindlichen nematischen Flüssigkristallmischung mit negativer dielektrischer Anisotropie,
- Elektrodenschichten mit darüberliegenden Orientierungsschichten auf den Innenseiten der Trägerplatten und
- einem Anstellwinkel zwischen der Längsachse der Moleküle an der Oberfläche der Trägerplatten und den Trägerplatten von etwa 85 Grad bis 95 Grad, dadurch gekennzeichnet, daß die nematische Flüssigkristallmischung eine Verbindung der Formel I enthält,

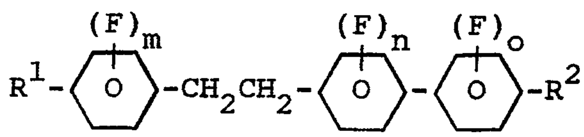

I

worin

$R^1$ und $R^2$ jeweils unabhängig voneinander eine Alkyl- oder Alkenylgruppe mit bis zu 15 C-Atomen, worin auch eine $CH_2$-Gruppe durch eine Gruppierung ausgewählt aus der Gruppe -O-, -S- und -CO-, ersetzt kein kann, oder einer der Reste $R^1$ und $R^2$ auch

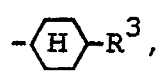

wobei $R^3$ eine der für $R^1$ und $R^2$ angegebenen Bedeutungen hat, und

m, n und o jeweils unabhängig voneinander 0, 1 oder 2

bedeuten, insbesondere eine solche Anzeige, wobei die Flüssigkristallmischung einen nematischen Phasenbereich von mindestens 60 K und eine Viskosität von maximal 30 mPa.s bei 20 °C aufweist, und/oder die Flüssigkristallmischung ein $|\Delta\epsilon|/\epsilon_{\parallel}$ von etwa 0,2 bis 0,7 aufweist, wobei $|\Delta\epsilon|$ der Betrag der dielektrischen Anisotropien und $\epsilon_{\parallel}$ die Dielektrizitätskonstante in Richtung der langen Achse der Flüssigkristallmoleküle bedeutet, und/oder wobei das Produkt von Doppelbrechung $\Delta n$ und der Schichtdicke der Flüssigkristallmischung zwischen 0,1 $\mu$m und 2,5 $\mu$m liegt.

Insbesondere ist eine Anzeige bevorzugt, worin die Dielektrizitätskonstante $\epsilon_{\parallel}$ größer oder gleich 3 ist, und/oder die dielektrische Anisotropie $\Delta\epsilon$ kleiner oder gleich -0,5 ist.

Weiterhin Gegenstand der Erfindung ist eine solche Anzeige, wobei die Flüssigkristallmischung mindestens eine flüssigkristalline Verbindung mit dem Strukturelement der Formeln 1 bis 7

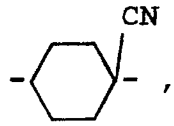 , -CHCN- , 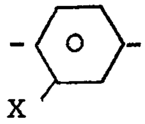 , 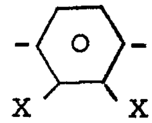 , 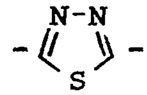 ,

1 2 3 4 5

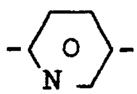 oder 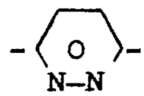

6 7

enthält, worin X Halogen oder CN bedeutet.

Darüber hinaus ist Gegenstand der Erfindung ein Verfahren zur Herstellung einer Flüssigkristallanzeige basierend auf dem Prinzip der elektrisch kontrollierten Doppelbrechung mit hoher Kennliniensteilheit und mit

- zwei planparallelen Trägerplatten, die mit einer Umrandung eine Zelle bilden,
- einer in der Zelle befindlichen nematischen Flüssigkristallmischung mit negativer dielektrischer Anisotropie,
- Elektrodenschichten mit darüberliegenden Orientierungsschichten auf den Innenseiten der Trägerplatten und
- einem Anstellwinkel zwischen der Längsachse der Moleküle an der Oberfläche der Trägerplatten und den Trägerplatten von etwa 85 Grad bis 95 Grad,

dadurch gekennzeichnet, daß man eine nematische Flüssigkristallmischung in die Zelle einfüllt, die mindestens eine Verbindung der Formel I enthält

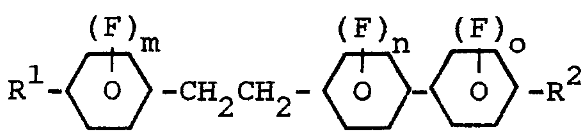 I

worin $R^1$ und $R^2$ die in Anspruch 1 gegebene Bedeutung besitzen.

Schließlich sind nematische Flüssigkristallmischungen der voran definierten Zusammensetzung Gegenstand der Erfindung.

Von den Verbindungen, welche ein Strukturelement der Formeln 1, 2, 3 oder 4 aufweisen, sind die Carbonitrile der Formel II besonders bevorzugt,

$R^4\text{-}(A^o\text{-}Z^o)_p\text{-}A\text{-}R^5$ II

worin

$R^4$ und $R^5$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

A

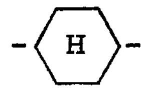, 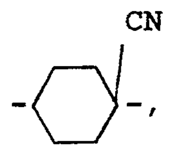, 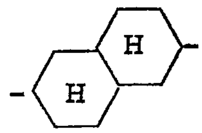, 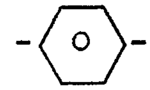

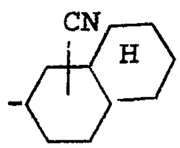, 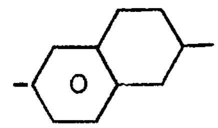 oder 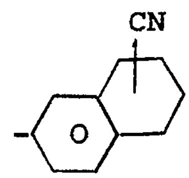

oder eine dieser Gruppen, worin eine oder mehrere $CH_2$-Gruppen durch O und/oder S oder aliphatische und/oder aromatische CH-Gruppen durch N ersetzt sind,

$A^o$ jeweils unabhängig voneinander unsubstituiertes oder ein- oder mehrfach durch Halogenatome, $CH_3$- und/oder Nitril-Gruppen substituiertes 1,4-Cyclohexylen, worin auch eine oder zwei nicht benachbarte $CH_2$-Gruppen durch -O- und/oder -S- und/oder eine -CH-$CH_2$-Gruppierung durch -C=N- ersetzt sein können (Cy), oder unsubstituiertes oder ein- oder mehrfach durch Halogenatome, $CH_3$- und/oder Nitril-Gruppen substituiertes 1,4-Phenylen, worin auch eine oder mehrere CH-Gruppen durch N ersetzt sein können (Ph) bedeutet, einer der Reste $A^o$ auch 2,6-Naphthylen (Na) oder Tetrahydro-2,6-naphthylen (4H-Na), gegebenenfalls durch Halogen oder CN substituiert,

$Z^o$ jeweils unabhängig voneinander -CO-O-, -O-CO-, -$CH_2$O-, -O$CH_2$-, -$CH_2CH_2$-, -CHCN-$CH_2$-, -$CH_2$-CHCN- oder eine Einfachbindung, und

p 1, 2 oder 3, oder im Falle A = Tetra- oder Octahydrophenanthren auch O bedeutet, wobei im Falle A =

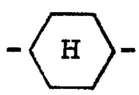, 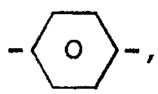, 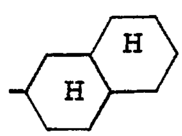 oder 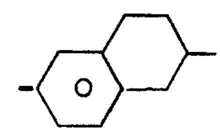

mindestens eine Gruppe $Z^o$ -CHCN$CH_2$- oder -$CH_2$CHCN-bedeutet und/oder in mindestens einer der Gruppen $R^4$ und $R^5$ mindestens eine $CH_2$-Gruppe durch -CHCN-ersetzt ist, als Komponenten flüssigkristalliner Phasen für elektrooptische Anzeigeelemente basierend auf dem ECB-Effekt sowie eine flüssigkristalline Phase für elektrooptische Anzeigeelemente basierend auf dem ECB-Effekt mit mindestens zwei flüssigkristallinen Komponenten, dadurch gekennzeichnet, daß sie mindestens eine Verbindung der Formel I enthält.

Weiterhin können die erfindungsgemäßen Anzeigen neben den Verbindungen der Formeln I und II auch eine Verbindung der Formel III enthalten,

$R^6$-$(A^1$-$Z^1)_m$-A-$(Z^2$-$A^2)_n$-$R^7$ III

worin

$R^6$ und $R^7$ jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind,

$A^1$ und $A^2$ jeweils unabhängig voneinander unsubstituiertes oder ein- oder mehrfach durch Halogenatome, $CH_3$- und/oder Nitril-Gruppen substituiertes 1,4-Cyclohexylen, worin auch eine oder zwei nicht benachbarte $CH_2$-Gruppen durch -O- und/oder -S- und/oder eine -CH-$CH_2$-Gruppierung durch -C=N-ersetzt sein können (Cy), oder unsubstituiertes oder ein- oder mehrfach durch Halogenatome, $CH_3$- und/oder Nitril-Gruppen substituiertes 1,4-Phenylen, worin auch eine oder mehrere CH-Gruppen durch N ersetzt sein können (Ph) bedeutet, einer der Reste $A^o$ auch 2,6-Naphthylen (Na) oder Tetrahydro-2,6-naphthylen

| | |
|---|---|
| | (4H-Na), gegebenenfalls durch Halogen oder CN substituiert, |
| A | Thiadiazo-2,5-diyl, 2-Fluor-1,4-Phenylen, 2,3-Difluor-1,4-phenylen oder in 2- ,3-, 2'- und/oder 3'-Position ein oder mehrfach durch Fluor substituiertes 4,4'-Biphenylyl, |
| $Z^1$ und $Z^2$ | jeweils -CO-O-, -O-CO-, $-CH_2CH_2-$, $-OCH_2-$, $-CH_2O-$ oder eine Einfachbindung, |
| m | 1 oder 2 und |
| n | 0 oder 1 |

bedeuten,
wobei für m = 2 die beiden Gruppen $A^1$ und $Z^1$ gleich oder voneinander verschieden sein können.

Darüber hinaus können die erfindungsgemäßen Anzeigen zusätzlich eine Verbindung der Formel IV enthalten,

$$R^8\text{-}(A^3\text{-}Z^1)_o\text{-}Q^1\text{-}C{\equiv}C\text{-}Q^2\text{-}(Z^2\text{-}A^4)_p\text{-}R^9 \qquad \text{IV}$$

worin

| | |
|---|---|
| $R^8$ und $R^9$ | jeweils unabhängig voneinander eine Alkylgruppe mit jeweils 1 bis 15 C-Atomen, worin auch eine oder mehrere $CH_2$-Gruppen durch eine Gruppierung ausgewählt aus der Gruppe -O-, -S-, -CO-, -CH-Halogen-, -CHCN-, -O-CO-, -O-COO-, -CO-O- und -CH=CH- oder auch durch eine Kombination von zwei geeigneten Gruppierungen ersetzt sein können, wobei zwei Heteroatome nicht direkt miteinander verknüpft sind, |
| $Q^1$ und $Q^2$ | jeweils unabhängig voneinander unsubstituiertes oder ein- oder mehrfach durch Halogenatome, $CH_3$- und/oder Nitrilgruppen substituiertes 1,4-Phenylen bedeutet, |
| $A^3$ und $A^4$ | jeweils unabhängig voneinander trans-1,4-Cyclohexylen, worin auch eine oder zwei nicht benachbarte $CH_2$-Gruppen durch -O- und/oder -S- ersetzt sein können oder 1,4-Phenylen, worin auch eine oder mehrere CH-Gruppen durch N ersetzt sein können, |
| o und p | jeweils unabhängig voneinander 0 oder 1, |

und $Z^1$ und $Z^2$ die bei Formel III angegebene Bedeutung haben.

Schließlich können die erfindungsgemäßen Anzeigen zusätzlich eine Verbindung der Formel V enthalten,

$$R^8\text{-}(A^1\text{-}Z^1)_m\text{-}Q^1\text{-}C{\equiv}C\text{-}R^{10} \qquad \text{V}$$

worin $R^{10}$ eine Alkylgruppe mit 1 bis 15 C-Atomen bedeutet, und $R^8$, $A^1$, $Z^1$, $Q^1$ und m die oben angegebene Bedeutung haben.

Die Herstellung der nematischen Flüssigkristallmischungen erfolgt in an sich üblicher Weise. In der Regel wird die gewünschte Menge der in geringerer Menge verwendeten Komponenten in den den Hauptbestandteil ausmachenden Komponenten gelöst, zweckmäßig bei erhöhter Temperatur. Es ist auch möglich, Lösungen der Komponenten in einem organischen Lösungsmittel, z. B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebenen Zusätze enthalten. Beispielsweise können 0-15 % pleochroitische Farbstoffe zugesetzt werden, ferner Leitsalze, vorzugsweise Ethyl-dimethyldodecylammonium-4-hexoxybenzoat, Tetrabutylammoniumtetraphenylboranat oder Komplexsalze von Kronenethern (vgl. z. B. Haller et al., Mol. Cryst. Liq. Cryst. Band 24, Seiten 249-258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-A 22 09 127, 22 40 864, 23 21 632, 23 38 281, 24 50 088, 26 37 430 und 28 53 728 beschrieben.

Die einzelnen Komponenten der Formeln I bis V der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formel I werden beispielsweise beschrieben in EP-A 0 084 194 und DE-A 39 06 019.

Entsprechende Verbindungen der Formel II werden beispielsweise beschrieben in DE-A 32 31 707, DE-A 33 20 024,
DE-A 33 32 691, DE-A 33 32 692, DE-A 34 07 013,
DE-A 34 37 935, DE-A 34 43 929, DE-A 35 33 333 und

DE-A 36 08 500. Verbindungen der Formel III sind beispielsweise beschrieben in DE-OS 39 02 330 und EP-OS 0 084 194.

Verbindungen der Formeln III und IV sind teilweise beschrieben in USP 3,925,482, DE-A 32 46 440, GB 21 55 465 A, EP-A 0 058 981, JP-A 60-155142 und D. Demus et al., Flüssige Kristalle in Tabellen II, VEB Deutscher Verlag für Grundstoffindustrie, Leipzig, 1984.

Die nematischen Flüssigkristallmischungen der erfindungsgemäßen Anzeigen enthalten vorzugsweise mindestens 5 % von Verbindungen der Formel I, insbesondere bevorzugt 7 bis 50 % von Verbindungen der Formel I.

Vorzugsweise enthalten diese Mischungen mindestens eine lateral fluorierte Verbindung der Formel I, worin die Summe von m, n und o 1 oder 2 ist, insbesondere worin einer der Indizes m, n und o 2 bedeutet.

Besonders bevorzugte Verbindungen der Formel I sind diejenigen der Formeln Ia bis In mit 3 Ringen:

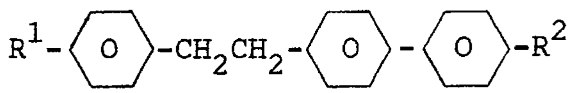
Ia

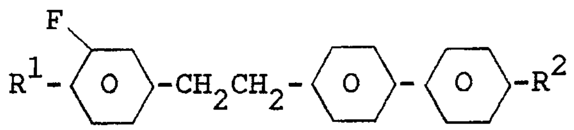
Ib

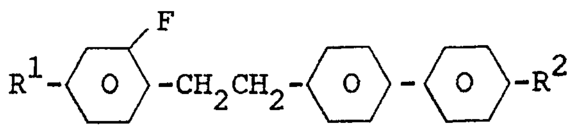
Ic

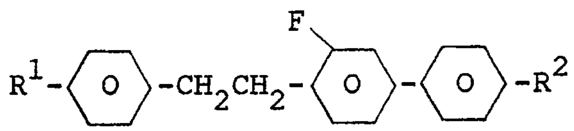
Id

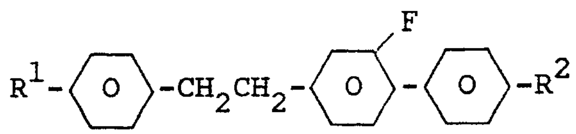
Ie

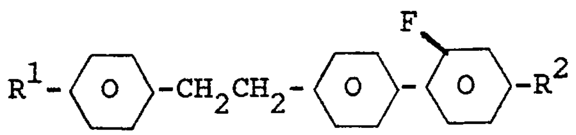
If

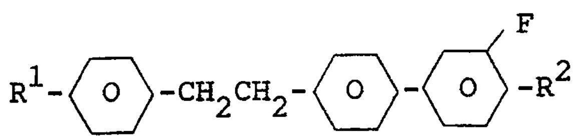
Ig

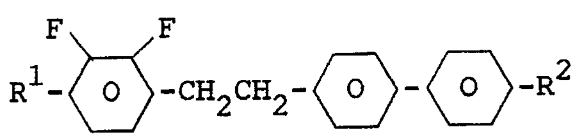
Ih

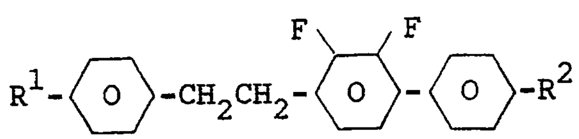
Ii

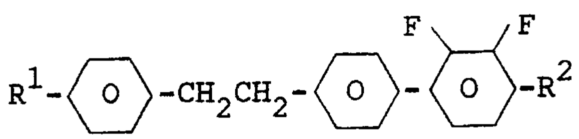
Ij

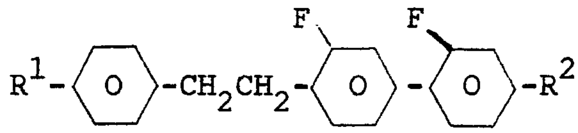
Ik

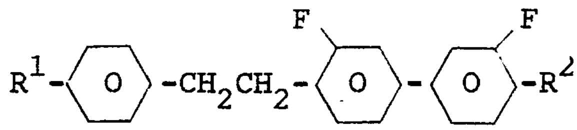
Il

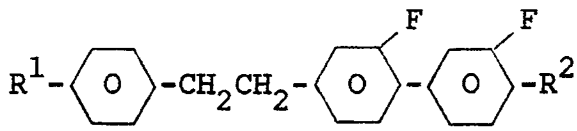
Im

sowie die Verbindungen der Formeln In bis Iz' mit 4 Ringen:

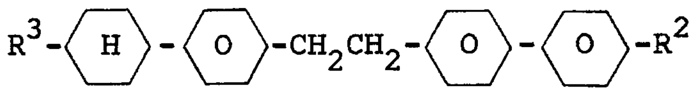
In

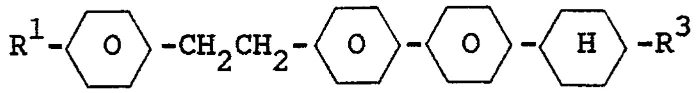
Io

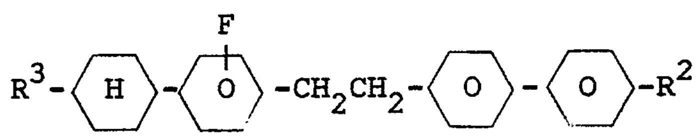
Ip

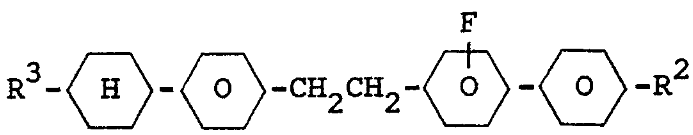
Iq

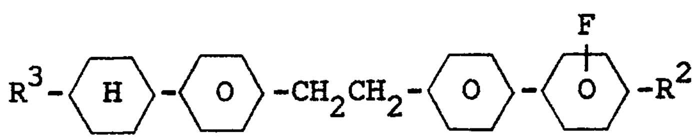
Ir

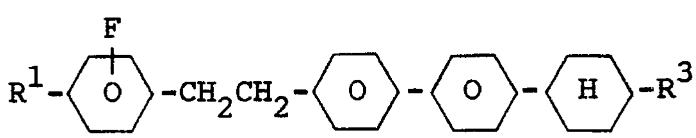
Is

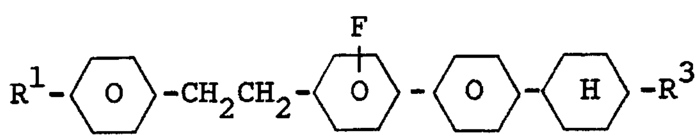
It

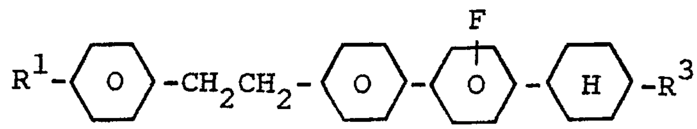

Iu

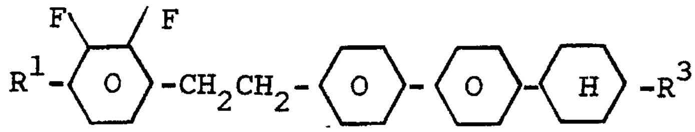

Iv

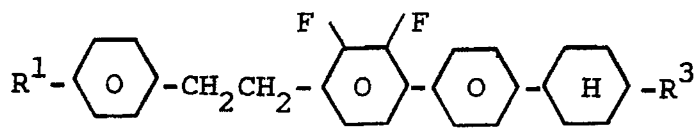

Iw

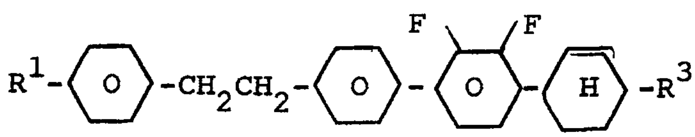

Ix

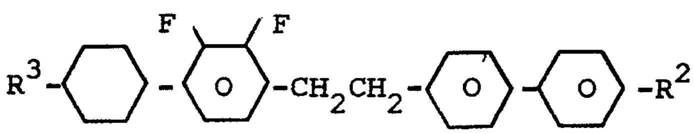

Iy

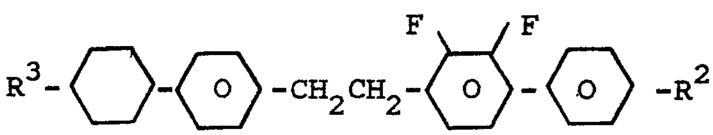

Iz

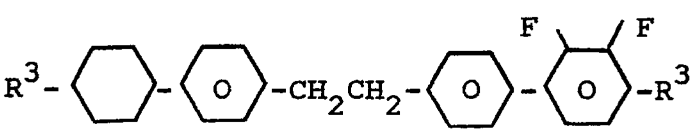

Iz'

Die nematischen Flüssigkristallmischungen enthalten vorzugsweise mindestens 10 % von Verbindungen der Formel II, insbesondere bevorzugt 10 bis 30 % von Verbindungen der Formel II. Vorzugsweise enthalten die erfindungsgemäßen Phasen mindestens eine Verbindung der Formel II, worin A eine in 1- oder 4-Position durch CN substituierte 1,4-Cyclohexylengruppe bedeutet, insbesondere eine Gruppe der Formel

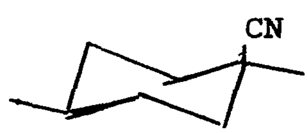

mit einer Nitrilgruppe in axialer Position. $R^4$ und $R^5$ sind vorzugsweise geradkettiges Alkyl oder Alkoxy, insbesondere Alkyl, mit vorzugsweise 2 bis 7 C-Atomen. $A^o$ ist vorzugsweise jeweils unabhängig voneinander trans-1,4-Cyclohexylen, 1,4-Phenylen (unsubstituiert oder durch Fluor substituiert), Pyrimidin-2,5-diyl oder Pyridin-2,5-diyl. $Z^o$ ist vorzugsweise jeweils eine Einfachbindung. p ist vorzugsweise 1 oder 2.

Besonders bevorzugte Verbindungen der Formel II sind diejenigen der Teilformeln IIa bis IIc:

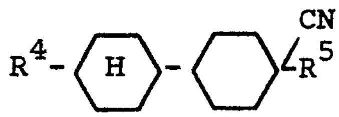 IIa

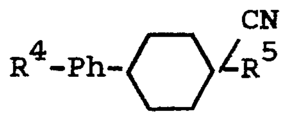 IIb

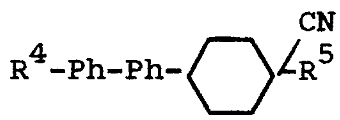 IIc

Besonders bevorzugt sind Verbindungen der Teilformeln IIa und IIc. -Ph-Ph- ist vorzugsweise

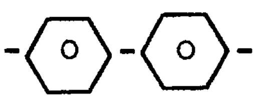, 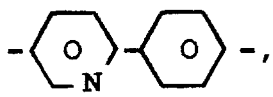, 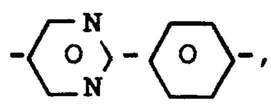, 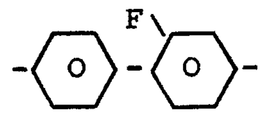

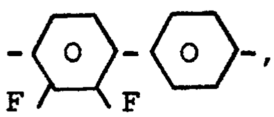, 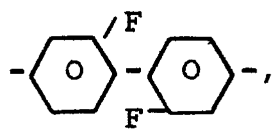, 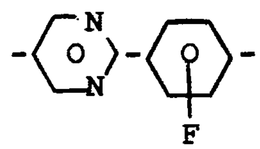 oder

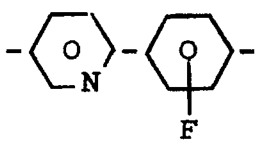

oder das Spiegelbild der unsymetrischen Gruppen.

Bevorzugte nematische Flüssigkristallmischungen enthalten mindestens eine Verbindung der Formel IIa, insbesondere mindestens eine lateral fluorierte Verbindung der Formel IIc. Ferner bevorzugt sind nematische Flüssigkristallmischungen enthaltend Verbindungen der Formel IIa und Verbindungen der Formel III.

Bevorzugte Phasen enthalten 30 bis 90 %, insbesondere 49 bis 86 % von Verbindungen der Formel III.

A ist vorzugsweise 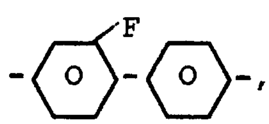, 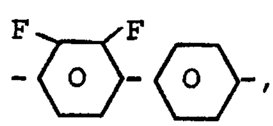,

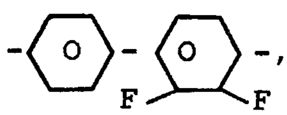, 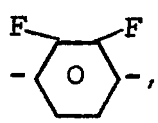, 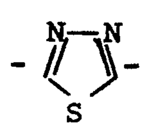 oder 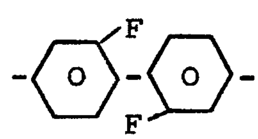

$R^6$ und $R^7$ sind vorzugsweise jeweils unabhängig voneinander Alkyl oder Alkoxy mit 2 bis 7 C-Atomen. m ist vorzugsweise 1. $A^1$ und $A^2$ sind vorzugsweise jeweils unabhängig voneinander trans-1,4-Cyclohexylen oder 1,4-Phenylen. $Z^1$ und $Z^2$ sind jeweils unabhängig voneinander vorzugsweise -CO-O-, -O-CO-, -$CH_2CH_2$- oder eine Einfachbindung, insbesondere bevorzugt -$CH_2CH_2$- oder eine Einfachbindung. Besonders bevorzugte Verbindungen der Formel III sind diejenigen der Teilformeln IIIa bis IIIk

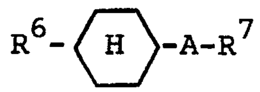
IIIa

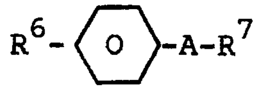
IIIb

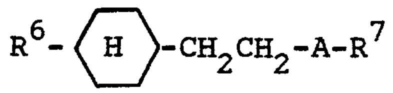
IIIb

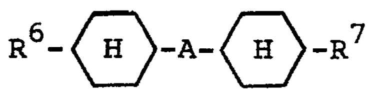
IIId

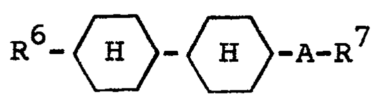
IIIe

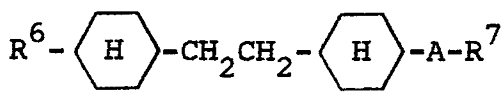
IIIf

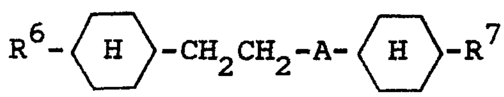
IIIg

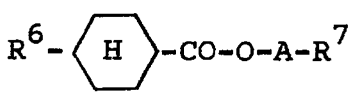
IIIh

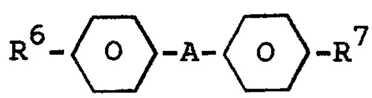
IIIi

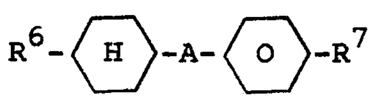
IIIj

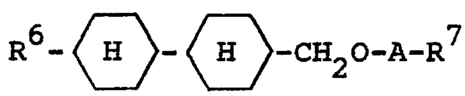
IIIh

Besonders bevorzugt sind Verbindungen der Teilformeln IIIa, IIIb, IIIc, IIIh und IIIj.

Besonders bevorzugte Phasen enthalten ferner noch mindestens eine Komponente der Formel IV und/oder V. $R^3$ ist vorzugsweise geradkettiges Alkyl oder Alkoxy mit jeweils 2 bis 7 C-Atomen. $R^6$ bzw. $R^7$ sind jeweils bevorzugt geradkettiges Alkyl mit 1 bis 7 C-Atomen. $Q^1$ und $Q^2$ sind jeweils unabhängig voneinander vorzugsweise 1,4-Phenylen oder durch Fluor substituiertes 1,4-Phenylen. $A^1$, $A^3$ und $A^4$ sind jeweils unabhängig voneinander vorzugsweise trans-1,4-Cyclohexylen oder 1,4-Phenylen. $Z^1$ und $Z^2$ sind jeweils vorzugsweise Einfachbindungen.

Die nematischen Flüssigkristallmischungen in den erfindungsgemäßen Anzeigen enthalten neben den Verbindungen der Formel I zwei weitere Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische von ≦ -0,3. Sie enthält bevorzugt Verbindungen der Formel II, insbesondere der Formel IIa und/oder Verbindungen der Formel III mit einer

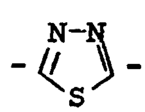 oder 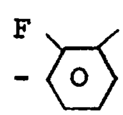 -Gruppe, insbesondere

Verbindungen der Formeln IIIa, IIIb, IIIh, IIIi, IIIj und IIIk. Der Anteil der Komponente A liegt zwischen 8 % und 50 %.

Für Komponente A wird vorzugsweise eine (oder mehrere) Einzelverbindung(en) gewählt, die einen

Wert von $\Delta\epsilon \leqq -0{,}5$, vorzugsweise $\Delta\epsilon \leqq -0{,}8$ haben. Dieser Wert muß umso negativer sein, je kleiner der Anteil A an der Gesamtmischung ist.

Bei sehr hohem Anteil der Komponente A kann der Wert $\Delta\epsilon$ der Komponente A auch nur schwach negativ sein, z.B. im Bereich von -0,5 bis -1,0. Neben den genannten bevorzugten Verbindungen der Formel II und III enthaltend ein Strukturelement der Formel

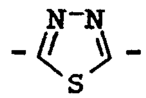 oder 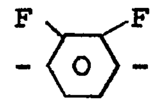

sind weiterhin lateral fluorierte Verbindungen der Formel I, insbesondere die, die ein Strukturelement der Formel

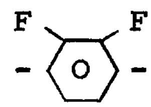

enthalten, und Tolanderivate der Formel IV enthaltend die Strukturelemente:

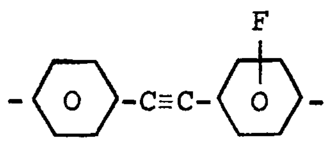 oder 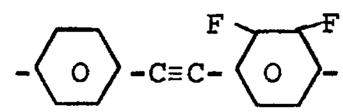

als Bestandteile der Komponente A bevorzugt.

Die Komponente B weist eine ausgeprägte Nematogenität und eine Viskosität von nicht mehr als 30 $mm^2s^{-1}$, vorzugsweise nicht mehr als 25 $mm^2s^{-1}$ bei 20 °C auf.

Besonders bevorzugte Einzelverbindungen der Komponente B sind extrem niedrig viskose nematische Flüssigkristalle mit nicht mehr als 18, vorzugsweise nicht mehr als 12 $mm^2s^{-1}$, bei 20 °C. Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind Verbindungen der Formel VI

$R^4$-$A^5$-$Z^1$-$A^6$-$R^5$ VI

worin $R^4$ und $R^5$ die für Formel II angegebene Bedeutung besitzen,

$Z^1$ -COO-, -O-CO-, $-CH_2CH_2-$, $-OCH_2-$, $-CH_2O-$ oder eine Einfachbindung, und

$A^5$ und $A^6$ jeweils unabhängig voneinander trans-1,4-Cyclohexylen oder unsubstituiertes oder durch Fluor substituiertes 1,4-Phenylen bedeuten.

Die erfindungsgemäßen Flüssigkristallphasen bestehen vorzugsweise aus 2 bis 15, vorzugsweise 3 bis 18 Komponenten. Neben Verbindungen der Formeln I bis V können auch noch andere Bestandteile zugegen sein, z. B. in einer Menge von bis zu 45 % der Gesamtmischung, vorzugsweise jedoch bis zu 34 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexyl-ester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl-oder Cyclohexyldioxane, gegebenenfalls halogenierten Stilbene, Benzylphenylether, Tolane und substituierten Zimtsäuren.

Die wichtigsten als Bestandteile derartiger Flüssigkristallphasen in Frage kommenden Verbindungen

lassen sich durch die Formel VI charakterisieren,

$R^{10}$-L-G-E-$R^{11}$ VI

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH-CQ- | -CH=N(O)- |
| | -C≡C- | $-CH_2-CH_2-$ |
| | -CO-O- | $-CH_2-O-$ |
| | -CO-S- | $-CH_2-S-$ |
| | -CH=N- | -COO-Phe-COO- |

oder eine C-C-Einfachbindung, Q Halogen, vorzugsweise Chlor, oder -CN, und $R^{10}$ und $R^{11}$ jeweils Alkyl, Alkoxy, Alkanoyloxy oder Alkoxycarbonyloxy mit bis zu 18, vorzugsweise bis zu 8 Kohlenstoffatomen, oder einer dieser Reste auch CM, NC, $NO_2$, $CF_3$, F, Cl oder Br bedeuten.

Bei den meisten dieser Verbindungen sind $R^{10}$ und $R^{11}$ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Der Aufbau der erfindungsgemäßen Flüssigkristallanzeigen entspricht der üblichen Geometrie, wie sie z.B. in EP-OS 0 240 379 beschrieben wird.

Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

Folgende Abkürzungen werden verwendet:

CCNnm

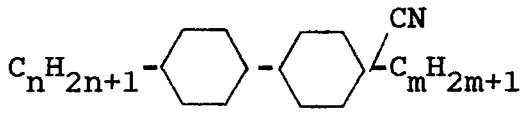

BCHnmF

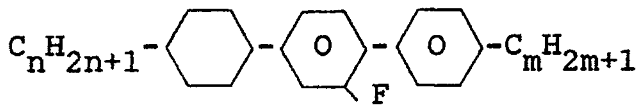

CBCnm

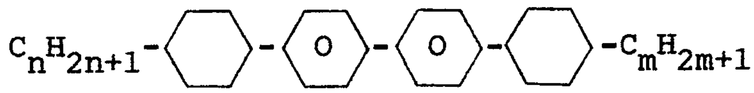

NCBnm

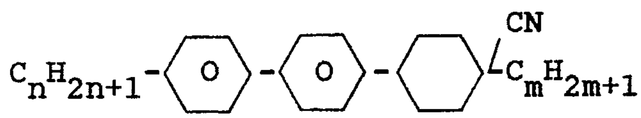

BnOm

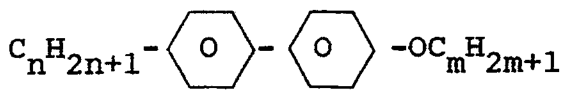

BEP-nmF

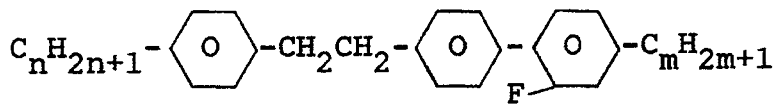

D-nOmFF

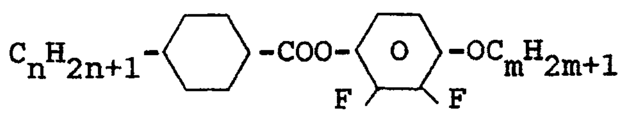

CBCnmF

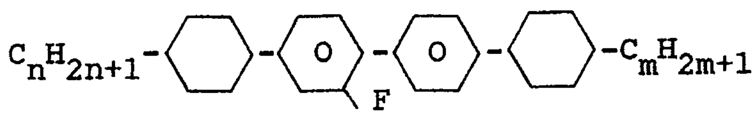

CPTPnOm

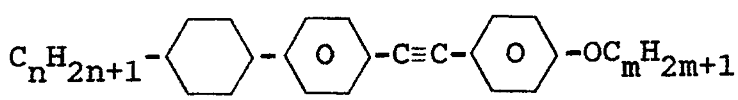

CCMOPnOm 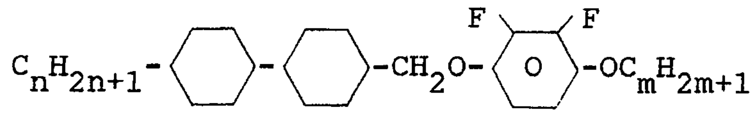

ETnOm 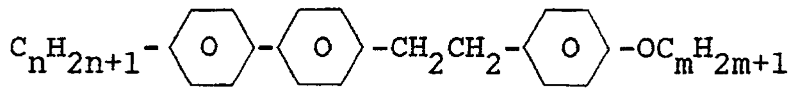

PCHnOm 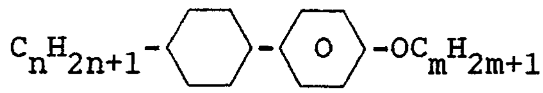

PTPnOm 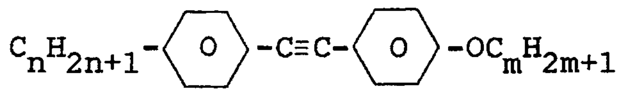

TnFFm 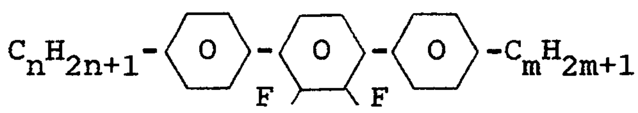

Tn.FOm 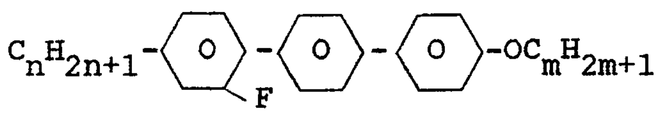

CTDPnOm 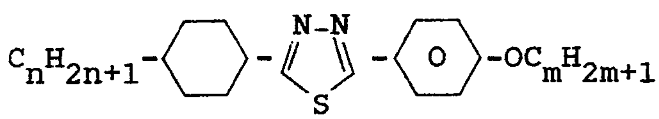

TDPnOm 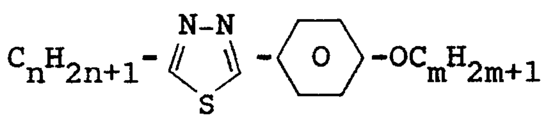

Die angegebenen Schwellenspannungswerte V (0,0), V (10,0), V (90,0) wurden in einer üblichen ECB-Zelle mit einer Schichtdicke von 5 µm bei 20 °C gemessen.

Weiterhin bedeuten:

| | | | |
|---|---|---|---|
| V (0,0) | Schwellenspannung [V] | 0 % Transmission | Blickwinkel 0° |
| V (10,0) | Schwellenspannung [V] | 10 % Transmission | Blickwinkel 0° |
| V (90,0) | Schwellenspannung [V] | 90 % Transmission | Blickwinkel 0° |

| | |
|---|---|
| Δn | die optische Anisotropie gemessen bei 20 °C und 589 nm |
| Δε | die dielektrische Anisotropie bei 20 °C |
| cp | Klärpunkt [°C] |
| η (T) | Viskosität [$mm^2s^{-1}$] bei T °C |
| S | Steilheit der Kennlinie |

$$S = \left( \frac{V\,(90,0)}{V\,(10,0)} - 1 \right) \cdot 100$$

Die zur Messung der Schwellspannung verwendete Anzeige weist zwei planparallele Trägerplatten, im Abstand von 5 µm und Elektrodenschichten mit darüberliegenden Orientierungsschichten aus Lecithin auf den Innenseiten der Trägerplatten auf, welche eine homeotrope Orientierung der Flüssigkristalle bewirken.

Beispiel 1

Man stellt eine Mischung bestehend aus

| Bestandteil | Gew.-% |
|---|---|
| CCN-33 | 10 |
| PCH-301 | 20 |
| PCH-302 | 6 |
| PCH-53 | 18 |
| CBC-33F | 3 |
| CBC-53F | 3 |
| CBC-55F | 3 |
| ET-502 | 10 |
| PTP-102 | 5 |
| PTP-201 | 4 |
| CPTP-301 | 6 |
| CPTP-302 | 5 |
| CPTP-303 | 7 |

her, deren physikalischen Daten aus Tabelle I entnommen werden können.

**Tabelle I**

| | | | |
|---|---|---|---|
| cp | +81 | V (0,0) | 5,47 (DAP) |
| η (20) | 18 | V (10,0) | 5,60 (DAP) |
| η (0) | 59 | V (90,0) | 6,03 (DAP) |
| η (-20) | 280 | S | 7,68 |
| η (-30) | 920 | | |
| Δn | +0,1498 | | |
| Δε | -0,7 | | |
| $\varepsilon_{\parallel}$ | 3,1 | | |
| $\varepsilon_{\perp}$ | 3,80 | | |

Beispiel 2

Man stellt eine flüssigkristalline Phase bestehend aus

| Bestandteil | Gew.-% |
|---|---|
| D-302FF | 6 |
| D-402FF | 6 |
| D-502FF | 6 |
| PCH-301 | 18 |
| PCH-302 | 15 |
| PCH-304 | 8 |
| PTP-102 | 5 |
| PTP-201 | 4 |
| CCMOP-302FF | 4 |
| CCMOP-502FF | 4 |
| ET-502 | 6 |
| CPTP-301 | 6 |
| CPTP-302 | 5 |
| CPTP-303 | 7 |
| CBC-53F | 0 |

her, deren physikalischen Daten aus Tabelle II entnommen werden können.

Tabelle II

| | | | |
|---|---|---|---|
| cp | +83 | V (0,0) | 3,56 (DAP) |
| η (20) | 19 | V (10,0) | 3,68 (DAP) |
| η (0) | 71 | V (90,0) | 4,01 (DAP) |
| η (-20) | 500 | S | 8,97 |
| η (-30) | 2220 | | |
| Δn | +0,1543 | | |
| Δε | -1,9 | | |
| $\varepsilon_{\parallel}$ | 3,4 | | |
| $\varepsilon_{\perp}$ | 5,3 | | |

Beispiel 3

Man stellt eine flüssigkristalline Phase bestehend aus

| Bestandteil | Gew.-% |
|---|---|
| TDP-301 | 8 |
| TDP-401 | 8 |
| TDP-302 | 8 |
| PCH-301 | 20 |
| PCH-302 | 14 |
| PTP-102 | 5 |
| PTP-201 | 4 |
| CTDP-301 | 8 |
| ET-502 | 7 |
| CPTP-301 | 6 |
| CPTP-302 | 5 |
| CPTP-303 | 7 |

her, deren physikalischen Daten aus Tabelle III entnommen werden können.

Tabelle III

| | | | |
|---|---|---|---|
| cp | +78 | V (0,0) | 3,12 (DAP) |
| η (20) | 22 | V (10,0) | 3,22 (DAP) |
| η (0) | 84 | V (90,0) | 4,45 (DAP) |
| η (-20) | 660 | S | 7,14 |
| η (-30) | 3230 | | |
| Δn | +0,1883 | | |
| Δε | -2,0 | | |
| $\varepsilon_{\parallel}$ | 4,3 | | |
| $\varepsilon_{\perp}$ | 6,3 | | |

Beispiel 4

Man stellt eine nematische Flüssigkristallmischung bestehend aus

| Bestandteil | Gew.-% |
|---|---|
| D-302FF | 10 |
| D-402FF | 10 |
| D-502FF | 10 |
| PCH-301 | 17 |
| PCH-302 | 12 |
| PTP-102 | 5 |
| PTP-201 | 4 |
| ET-302 | 7 |
| ET-502 | 7 |
| CPTP-301 | 6 |
| CPTP-302 | 5 |
| CPTP-303 | 7 |

her, deren physikalischen Daten aus Tabelle IV entnommen werden können.

Tabelle IV

| | | | |
|---|---|---|---|
| cp | +87 | V (0,0) | 3,56 (DAP) |
| η (20) | 20 | V (10,0) | 3,66 (DAP) |
| η (0) | 79 | V (90,0) | 3,96 (DAP) |
| η (-20) | 620 | S | 8,20 |
| η (-30) | 3360 | | |
| Δn | +0,1682 | | |
| Δε | -2,1 | | |
| $\varepsilon_{\parallel}$ | 3,5 | | |
| $\varepsilon_{\perp}$ | 5,6 | | |

Beispiel 5

Man stellt eine nematische Flüssigkristallmischung bestehend aus

| Bestandteil | Gew.-% |
|---|---|
| D-302FF | 10 |
| D-402FF | 10 |
| D-502FF | 10 |
| PCH-301 | 12 |
| PCH-302 | 6 |
| BEP15F | 7 |
| BEP35F | 7 |
| PTP-102 | 5 |
| PTP-201 | 4 |
| ET-302 | 7 |
| ET-502 | 7 |
| CPTP-301 | 5 |
| CPTP-302 | 4 |
| CPTP-303 | 6 |

her, deren physikalischen Daten aus Tabelle V entnommen werden können.

**Tabelle V**

| | | | |
|---|---|---|---|
| cp | +86 | V (0,0) | 3,47 (DAP) |
| η (20) | 23 | V (10,0) | 3,65 (DAP) |
| η (0) | 87 | V (90,0) | 3,94 (DAP) |
| η (-20) | 690 | S | 7,95 |
| η (-30) | | | |
| Δn | +0,1754 | | |
| Δε | -2,0 | | |
| $\varepsilon_{\|\|}$ | 3,6 | | |
| $\varepsilon_{\perp}$ | 5,6 | | |

Beispiel 6

Man stellt eine nematische Flüssigkristallmischung bestehend aus

| Bestandteil | Gew.-% |
|---|---|
| D-302FF | 10 |
| D-402FF | 10 |
| D-502FF | 10 |
| PCH-301 | 17 |
| PCH-302 | 10 |
| BEP15F | 4 |
| BEP35F | 4 |
| PTP-102 | 5 |
| PTP-201 | 4 |
| ET-302 | 4 |
| ET-502 | 4 |
| CPTP-301 | 6 |
| CPTP-302 | 5 |
| CPTP-303 | 7 |

her, deren physikalischen Daten aus Tabelle VI entnommen werden können.

Tabelle VI

| | | | |
|---|---|---|---|
| cp | +82 | V (0,0) | 3,46 (DAP) |
| η (20) | 20 | V (10,0) | 3,61 (DAP) |
| η (0) | 77 | V (90,0) | 3,92 (DAP) |
| η (-20) | 590 | S | 8,59 |
| η (-30) | 2790 | | |
| Δn | +0,1639 | | |
| Δε | -2,0 | | |
| $\varepsilon_{\|\|}$ | 3,6 | | |
| $\varepsilon_{\perp}$ | 5,6 | | |

Beispiel 7

Man stellt eine nematische Flüssigkristallmischung bestehend aus

| Bestandteil | Gew.-% |
|---|---|
| D-302FF | 9 |
| D-402FF | 9 |
| D-502FF | 9 |
| PCH-301 | 17 |
| PCH-302 | 12 |
| ET-202 | 6 |
| ET-302 | 6 |
| ET-501 | 6 |
| ET-502 | 6 |
| T-3FF3 | 10 |
| T-5.FO2 | 10 |

her, deren physikalischen Daten aus Tabelle VII entnommen werden können.

Tabelle VII

| | |
|---|---|
| cp | +82 |
| η (20) | 20 |
| Δn | +0,1576 |
| Δε | -2,2 |
| $\varepsilon_{\parallel}$ | 3,5 |
| $\varepsilon_{\perp}$ | 5,7 |
| $\overline{V}$ (0,0) | 3,35 (DAP) |

Beispiel 8

Man stellt eine nematische Flüssigkristallmischung bestehend aus

| Bestandteil | Gew.-% |
|---|---|
| D-302FF | 9 |
| D-402FF | 9 |
| D-502FF | 9 |
| PCH-301 | 15 |
| PCH-302 | 6 |
| BEP15F | 7 |
| BEP35F | 7 |
| ET-202 | 6 |
| ET-302 | 6 |
| ET-501 | 6 |
| ET-502 | 6 |
| T-3FF3 | 7 |
| T-5.FO2 | 7 |

her, deren physikalischen Daten aus Tabelle VIII entnommen werden können.

Tabelle VIII

| | |
|---|---|
| cp | +79 |
| η (20) | 22 |
| Δn | +0,1609 |

Beispiel 9

Man stellt eine flüssigkristalline Phase her bestehend aus

| Bestandteil | Gew.-% |
|---|---|
| CCN-33 | 9 |
| NCB-33 | 5 |
| BEP-15F | 14 |
| BEP-35F | 14 |
| ET-202 | 14 |
| ET-302 | 14 |
| ET-501 | 13 |
| ET-502 | 13 |
| CBC-33F | 4 |

Beispiel 10

Man stellt eine nematische Flüssigkristallmischung her bestehend aus

| Bestandteil | Gew.-% |
|---|---|
| CCN-47 | 12 |
| NCB-45 | 5 |
| PCH-301 | 13 |
| PCH-302 | 7 |
| B-301 | 7 |
| B-201 | 7 |
| CBC-33 | 5 |
| CBC-53F | 7 |
| BEP-15F | 19 |
| BEP-35F | 18 |

## Patentansprüche

1. Flüssigkristallanzeige basierend auf dem Prinzip der elektrisch kontrollierten Doppelbrechung mit
   - zwei planparallelen Trägerplatten, die mit einer Umrandung eine Zelle bilden,
   - einer in der Zelle befindlichen nematischen Flüssigkristallmischung mit negativer dielektrischer Anisotropie,
   - Elektrodenschichten mit darüberliegenden Orientierungsschichten auf den Innenseiten der Trägerplatten und
   - einem Anstellwinkel zwischen der Längsachse der Moleküle an der Oberfläche der Trägerplatten und den Trägerplatten von etwa 85 Grad bis 95 Grad dadurch gekennzeichnet, daß die nematische Flüssigkristallmischung eine Verbindung der Formel I enthält,

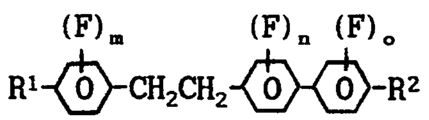

I

worin

$R^1$ und $R^2$ jeweils unabhängig voneinander eine Alkyl- oder Alkenylgruppe mit bis zu 15 C-Atomen, worin auch eine $CH_2$-Gruppe durch eine Gruppierung ausgewählt aus der Gruppe -O-, -S- und -CO-, ersetzt sein kann, oder einer der Reste $R^1$ und $R^2$ auch

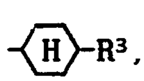

wobei $R^3$ eine der für $R^1$ und $R^2$ angegebenen Bedeutungen hat, und

m, n und o jeweils unabhängig voneinander 0, 1 oder 2

bedeuten.

2. Anzeige nach Anspruch 1, dadurch gekennzeichnet, daß die Flüssigkristallmischung einen nematischen Phasenbereich von mindestens 60 K und eine Viskosität von maximal 30 mPa.s bei 20 °C aufweist.

3. Anzeige nach mindestens einem der Ansprüche 1 und 2, dadurch gekennzeichnet, daß die Flüssigkri-

stallmischung ein $|\Delta\epsilon|/\epsilon_{\shortparallel}$ von etwa 0,2 bis 0,7 aufweist, wobei $|\Delta\epsilon|$ der Betrag von dielektrischen Anisotropien und $\epsilon_{\shortparallel}$ die Dielektrizitätskonstante in Richtung der langen Achse der Flüssigkristallmoleküle bedeutet.

**4.** Anzeige nach mindestens einem der Ansprüche 1 bis 3, dadurch gekennzeichnet, daß das Produkt von Doppelbrechung $\Delta n$ und der Schichtdicke der Flüssigkristallmischung zwischen 0,1 $\mu m$ und 2,5 $\mu m$ liegt.

**5.** Anzeige nach mindestens einem der Ansprüche 1 bis 4, dadurch gekennzeichent, daß die Dielektrizitätskonstante $\epsilon_{\shortparallel}$ größer oder gleich 3 ist.

**6.** Anzeige nach mindestens einem der Ansprüche 1 bis 5, dadurch gekennzeichnet, daß die dielektrische Anisotropie $\Delta\epsilon$ kleiner oder gleich -0,5 ist.

**7.** Anzeige nach mindestens einem der Ansprüche 1 bis 6, dadurch gekennzeichnet, daß die Flüssigkristallmischung mindestens eine flüssigkristalline Verbindung mit dem Strukturelement

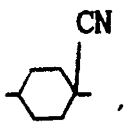 , -CHCH- , 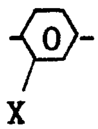 , 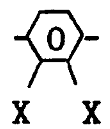 , 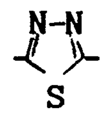 , 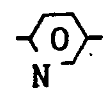 und

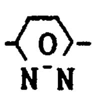

enthält, worin X Halogen oder CN bedeutet.

**8.** Verfahren zur Herstellung einer Flüssigkristallanzeige basierend auf dem Prinzip der elektrisch kontrollierten Doppelbrechung mit hoher Kennliniensteilheit und mit

- zwei planparallelen Trägerplatten, die mit einer Umrandung eine Zelle bilden,
- einer in der Zelle befindlichen nematischen Flüssigkrsitallmischung mit negativer dielektrischer Anisotropie,
- Elektrodenschichten mit darüberliegenden Orientierungsschichten auf den Innenseiten der Trägerplatten und
- einem Anstellwinkel zwischen der Längsachse der Moleküle an der Oberfläche der Trägerplatten und den Trägerplatten von etwa 85 Grad bis 95 Grad,

dadurch gekennzeichnet, daß man eine nematische Flüssigkristallmischung in die Zelle einfüllt, die mindestens eine Verbindung der Formel I enthält

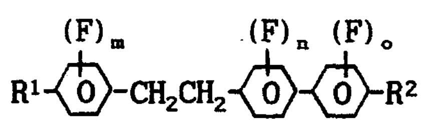

worin $R^1$ und $R^2$ die in Anspruch 1 gegebene Bedeutung besitzen.

**9.** Nematische Flüssigkristallmischung der in mindestens einem der Ansprüche 1 bis 7 definierten Zusammensetzung.